# EUROPEAN PATENT APPLICATION

(11) **EP 3 617 856 A1**
(43) Date of publication of application: **04.03.2020**
(21) Application number: 18192033.1
(22) Date of filing: 31.08.2018
(51) Int. Cl.: G06F 3/041, G06F 3/044, G06F 3/01

(54) **USER INPUT DEVICE WITH CAPACITIVE AND TRIBOELECTRIC SENSORS**

(71) Applicant: SABIC Global Technologies B.V., 4612 PX Bergen op Zoom (NL)
(72) Inventor: IJSSELMUIDEN, Samuel Tsunduka, 4612 PX Bergen op Zoom (NL); GELEBART, Anne Helene, 4612 PX Bergen op Zoom (NL); CARAVEO FRESCAS, Jesus Alfonso, 4612 PX Bergen op Zoom (NL)
(74) Representative: Lang, Johannes

(57) **Abstract**

Triboelectric sensors can be used to provide interaction between an electronic device and a human through the sense of touch. A triboelectric sensor may determine an amount of force applied to the sensor by a user, such as with their hand or fingers, and translate the applied force to an electrical signal. That electrical signal may be processed and used to control operation of the electronic device. When triboelectric sensors are integrated with capacitive sensors in arrays, the capacitive sensor can be used to provide touch location information and input from a triboelectric sensor can be used to determine applied force at that touch location.

## Description

### FIELD OF INVENTION

The present disclosure relates generally to user-input devices and, more particularly but not by way of limitation, to user-input devices based on triboelectric sensors.

### BACKGROUND

Interaction with electronic devices, such as computers, home appliances, or car consoles, has been characterized by the use of mechanical switches (keyboard, buttons, knobs, etc.) as the input mechanism for the given system to perform an action. An on/off switch in many appliances is a mechanical switch that lets current flow through it when pressed but presents a large resistance to current flow when not pressed. Switches are used in computer keyboards which users apply force to enter the desired letter. Some recent developments incorporate the use of touch sensitive technology to replace the mechanical switches. Capacitive, resistive, or optical-based proximity or touch sensors are being used to replace mechanical switches and knobs, such as the controls found in a car's console. Touch-sensitive displays are embedded into systems like mobile phones, tablets, or even ATM machines.

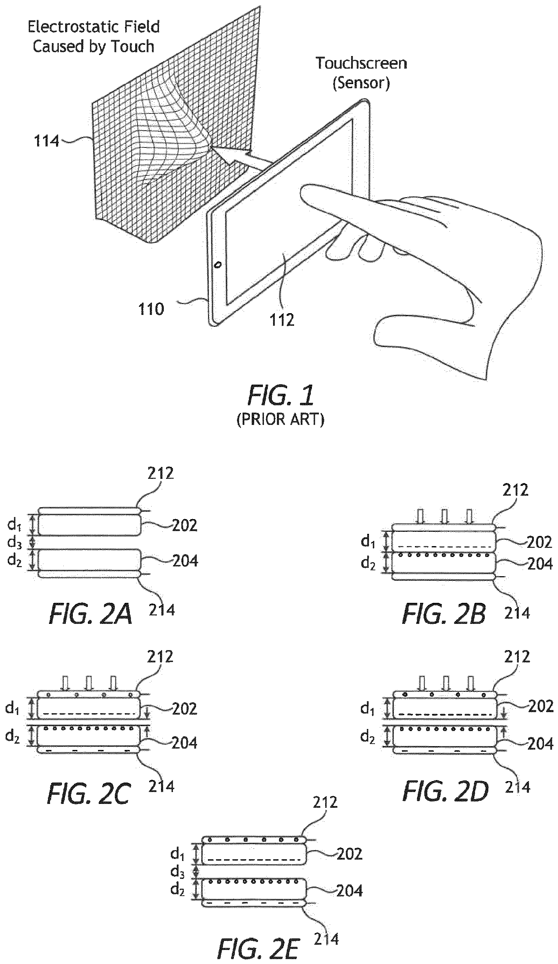

One example of a conventional touch sensor is shown in FIG. 1. FIG. 1 is an illustration of a capacitive touch screen according to the prior art. A capacitive touch screen 112 of a mobile device 110 may sense the user input as a perturbance in an electrostatic field as illustrated in graph 114. This field may be processed to determine a location of a user's input. One drawback is that the strength of the touch (or the force applied to the screen) cannot accurately be determined through capacitive sensing of the kind shown in FIG. 1.

Only certain examples of drawbacks to conventional electronic devices and input and output to those devices are described above. However, these drawbacks illustrate a need for further improvements in user input and user feedback to improve capability of electronic devices, such as light switches or consumer smartphones, to interact with users.

### SUMMARY

Triboelectric sensors can be used to provide interaction between an electronic device and a human through the sense of touch. A triboelectric sensor may determine an amount of force applied to the sensor by a user, such as with their hand or fingers, and translate the applied force to an electrical signal. That electrical signal may be processed and used to control operation of the electronic device. When used with a capacitive sensor, signals from the triboelectric sensor and the capacitive sensor may provide additional information to the device to allow new manners of input to and interaction with the user device. For example, the capacitive sensor can be used to provide touch location information and input from a triboelectric sensor can be used to determine applied force at that touch location. Synchronizing input signals from the triboelectric sensor(s) and array of capacitive sensors can provide the user device with additional information from the user and allow the user to provide more information to the user device. For example, a user may press lightly on a point on the screen to indicate a first command or may press strongly on the same point on the screen to indicate a second command. The coordinated output from the triboelectric sensors and the capacitive sensor can provide input signals indicating a (x,y) location on the screen and an applied force measurement indicating a light touch or a hard touch.

The present devices may include a triboelectric layer with approximately 3-20 wt.% of Fluorinated polyhedral oligomeric Silsesquioxane (F-POSS) that replaces or supplements a conventional dielectric polymer layer, such as Polyethylene Terephthalate (PET), used in conventional capacitive touch-enabled display devices. Such devices may include multiple capacitive sensors and triboelectric sensors arranged in interspersed arrays using the triboelectric layer as a pressure-sensing layer. The triboelectric layer may be a continuous layer across many electrodes, with some electrodes used for capacitive sensing and some electrodes used for pressure sensing. In such a configuration there may be one triboelectric layer serving many capacitive sensors. The triboelectric layer may alternatively be patterned into discrete portions corresponding to individual sensors. In such a configuration there may be interspersed arrays of capacitive sensors and triboelectric sensors, each sensor having a discrete portion of triboelectric material.

In some configurations, the present devices may include a first array comprising a plurality of capacitive sensors configured to configure to detect a touch location of a touch by a user and a second array comprising a plurality of triboelectric sensors interspersed with the capacitive sensors of the first array, the triboelectric sensors configured to detect a touch force applied to the touch location by the user. Interspersing the sensors of the two arrays provides for touch and force sensing across an entire area. In one interspersed array configuration there is one triboelectric sensor for each capacitive sensor and each triboelectric sensors and corresponding capacitive sensor are in close proximity to each other. In close proximity, for each capacitive sensor the closest triboelectric sensor is the triboelectric sensor corresponding to that capacitive sensor. In other interspersed array configurations there may be a different ratio of triboelectric sensors to capacitive sensors. For example, there may be one triboelectric sensor for each two capacitive sensors or there may be two triboelectric sensors for each capacitive sensor. The ratio of capacitive sensors to triboelectric sensors may be selected based on a desired sensing resolution for touch location and touch force. If higher resolution is desired for touch location sensing, the ratio of sensors may include more capacitive sensors than triboelectric sensors.

The electronic device may provide haptic feedback to the user through the sense of touch by incorporating a haptic feedback component with the triboelectric sensor and the capacitive sensor. The haptic feedback components may be arranged in an array and interspersed within the arrays of capacitive sensors and triboelectric sensors. A haptic feedback component, such as an actuator, may be integrated with sensors, such as triboelectric and capacitive sensor arrays, as part of a component in an electronic device, such as a smart phone. The actuator may be a thin film device comprised of a piezoelectric material that can be activated by a third array of electrodes coupled to the piezoelectric material and selected using row and column addressing lines.

Examples throughout this description demonstrate a novel touch sensor technology that is able to recreate the sense of touch, giving the user the feel of interaction with the arrays of capacitive and triboelectric sensors, and allow for custom, dynamic feedback not possible with conventional input devices. In some configurations, the present input devices may include a third array comprising a plurality of haptic feedback components interspersed with the capacitive sensors of the first array and the triboelectric sensors of the second array, with the haptic feedback components configured to provide haptic feedback to the user. Processing circuitry, such as a general-purpose processor or other logic circuitry, may control the third array to provide feedback to a user through the haptic feedback components based, at least in part, on the touch location determined from the first input signal and/or the magnitude of the touch force determined from the second input signal. For example, a strength of the feedback may correspond to the magnitude of the touch force indicated by the second input signal. Another example feedback technique may indicate to the user a touch location on the screen, such as by providing targeted feedback through a subset of the array of piezoelectric actuators. In some configurations, each haptic feedback component in an array may have a bottom electrode, a piezoelectric layer on the bottom layer, and a top electrode on the piezoelectric layer.

In some examples, a triboelectric sensor can be self-powering and/or provide power to other components. For example, the triboelectric sensors may be coupled to an energy storage device, which stores charge generated by the triboelectric layer such as when force is applied to the triboelectric sensor or other contact with the triboelectric layer including friction inside a user's pocket, bag or during use. The energy storage device may then be used to power the triboelectric sensor or other components such as processing circuitry. In some configurations, an energy storage device coupled to the triboelectric sensors of the second array and configured to store energy generated when a force is applied to one or more sensors of the second array. A device with such an energy storage device may also include processing circuitry coupled to the triboelectric sensors of the second array and the energy storage device and configured to determine a magnitude of the touch force applied to sensors of the second array and receive power from the energy storage device to determine the force applied to the triboelectric sensors of the second array.

The arrangements of triboelectric and capacitive sensors with or without haptic feedback can be fabricated on either rigid or flexible substrates. Having a mechanically flexible touch sensor with location and force sensing allows the design of lighter, smaller, more elegant touch interfaces. Devices constructed in accordance with the examples described herein can be used to replace mechanical switches in electronic displays, appliances, car consoles, peripheral input devices (e.g., keyboards, keypads), etc. In some configurations, the sensors may be manufactured using transparent materials such that the sensor arrays can be overlaid above or below an electronic display such as a liquid crystal display (LCD) or light emitting diode (LED)-based display.

Furthermore, the touch sensor can also be used as a force sensor to allow more than simple binary on/off input from a user. As an example, a user may make a soft touch on the input device or a hard touch on the input device. The capacitive sensors may be used to determine that the touch is on a portion of a display showing a volume button. The triboelectric sensors may be used to determine an amount of force applied to the press on the volume button. The amount of force may be used to determine a volume setting for the device. If haptic feedback components are present the input device may respond with stronger haptic feedback in response to a stronger applied force to the input device. Another example for pressure-based touch sensing include three-dimensional control by press hard on one location and soft on another simultaneously to rotate virtual objects on the display. Yet another example for pressure-based touch sensing include using the amount of applied force to control a slider at the touch location by correlating the pressure applied to a scaled value between low brightness and high brightness, low volume and high volume, low speed and high speed, and the like. A further example for pressure-based touch sensing includes changing the thickness of a drawing stroke based on applied pressure.

A touch/force sensor using triboelectric thin films may be incorporated into consumer electronic devices, such as mobile devices, power switches, volume controls, or other input device. The applications are not limited to those described, but can be used, for example, as a substitute or supplement to any input device. Still other example uses for triboelectric sensors include mechanical switches, such as in vehicles (e.g., engine start, doors, windows, seats, etc.).

One configuration of a triboelectric sensor may include first and second triboelectric thin films on opposite sides of a spacer thin film with thin film electrodes abutting the triboelectric thin films. These separate thin films may be formed in a stack on a substrate. For example, each of the triboelectric sensors may include a first electrode; a first triboelectric thin film on the electrode; a spacer on the first triboelectric thin film; a second triboelectric thin film on the spacer; and a second electrode on the second triboelectric thin film, wherein the first triboelectric thin film comprises an electronegative triboelectric material, and wherein the second triboelectric thin film comprises an electropositive triboelectric material.

The triboelectric sensor or apparatus may execute steps to facilitate the processing and transmission of user input received at the triboelectric and capacitive sensor(s). A processor, or other logic circuitry, may be configured through hardware, software, and/or firmware to execute steps including receiving a first input signal from the first array of sensors indicative of a touch location of a touch by a user; receiving a second input signal from the second array of sensors indicative of a magnitude of a touch force applied to the touch location by the user; determining a user input based, at least in part, on the first input signal and the second input signal; and/or generating a control signal piezoelectric haptic feedback elements of a third array, wherein the control signal is based, at least in part, on the touch location and the magnitude of touch force.

As used herein, various terminology is for the purpose of describing particular implementations only and is not intended to be limiting of implementations. For example, as used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). The term "coupled" is defined as connected, although not necessarily directly, and not necessarily mechanically; two items that are "coupled" may be unitary with each other. The terms "a" and "an" are defined as one or more unless this disclosure explicitly requires otherwise. The term "or" is used to refer to a nonexclusive "or" unless otherwise indicated.

The term "about" as used herein can allow for a degree of variability in a value or range, for example, within 10%, within 5%, or within 1% of a stated value or of a stated limit of a range, and includes the exact stated value or range. The term "substantially" is defined as largely but not necessarily wholly what is specified (and includes what is specified; e.g., substantially 90 degrees includes 90 degrees and substantially parallel includes parallel), as understood by a person of ordinary skill in the art. In any disclosed configuration, the term "substantially" may be substituted with "within [a percentage] of' what is specified, where the percentage includes .1, 1, or 5 percent; and the term "approximately" may be substituted with "within 10 percent of' what is specified. The phrase "and/or" means and or. To illustrate, A, B, and/or C includes: A alone, B alone, C alone, a combination of A and B, a combination of A and C, a combination of B and C, or a combination of A, B, and C. In other words, "and/or" operates as an inclusive or. The phrase "at least one of A and B" has the same meaning as "A, B, or A and B."

Throughout this document, values expressed in a range format should be interpreted in a flexible manner to include not only the numerical values explicitly recited as the limits of the range, but also to include all the individual numerical values or sub-ranges encompassed within that range as if each numerical value and sub-range is explicitly recited. For example, a range of "about 0.1 % to about 5%" or "about 0.1 % to 5%" should be interpreted to include not just about 0.1 % to about 5%, but also the individual values (e.g., 1 %, 2%, 3%, and 4%) and the sub-ranges (e.g., 0.1 % to 0.5%, 1.1 % to 2.2%, 3.3% to 4.4%) within the indicated range. The statement "about X to Y" has the same meaning as "about X to about Y," unless indicated otherwise. Likewise, the statement "about X, Y, or about Z" has the same meaning as "about X, about Y, or about Z," unless indicated otherwise.

The terms "comprise" (and any form of comprise, such as "comprises" and "comprising"), "have" (and any form of have, such as "has" and "having"), and "include" (and any form of include, such as "includes" and "including"). As a result, an apparatus that "comprises," "has," or "includes" one or more elements possesses those one or more elements, but is not limited to possessing only those one or more elements. Likewise, a method that "comprises," "has," or "includes" one or more steps possesses those one or more steps, but is not limited to possessing only those one or more steps.

Any configuration of any of the systems, methods, and article of manufacture can consist of or consist essentially of - rather than comprise/have/include - any of the described steps, elements, and/or features. Thus, in any of the claims, the term "consisting of' or "consisting essentially of' can be substituted for any of the open-ended linking verbs recited above, in order to change the scope of a given claim from what it would otherwise be using the open-ended linking verb. Additionally, it will be understood that the term "wherein" may be used interchangeably with "where."

Further, a device or system that is configured in a certain way is configured in at least that way, but it can also be configured in other ways than those specifically described. The feature or features of one configuration may be applied to other configurations, even though not described or illustrated, unless expressly prohibited by this disclosure or the nature of the configurations. In the methods described herein, the acts can be carried out in any order, except when a temporal or operational sequence is explicitly recited. Furthermore, certain acts can be carried out concurrently even if described as being carried out sequentially. In addition, it is to be understood that the phraseology or terminology employed herein, and not otherwise defined, is for the purpose of description only and not of limitation. Any use of section headings is intended to aid reading of the document and is not to be interpreted as limiting; information that is relevant to a section heading may occur within or outside of that particular section.

Some details associated with the configurations are described above, and others are described below. Other implementations, advantages, and features of the present disclosure will become apparent after review of the entire application, including the following sections:

### Brief Description of the Drawings, Detailed Description, and the Claims.

### BRIEF DESCRIPTION OF THE DRAWINGS

The following drawings illustrate by way of example and not limitation. For the sake of brevity and clarity, every feature of a given structure is not always labeled in every figure in which that structure appears. Identical reference numbers do not necessarily indicate an identical structure. Rather, the same reference number may be used to indicate a similar feature or a feature with similar functionality, as may non-identical reference numbers.
**FIG. 1** is a perspective view of a prior art capacitive touch screen.
**FIGS. 2A-2E** are cross-sectional views of an example of the present triboelectric sensors shown in different states of operation.
**FIG. 3A** is a cross-sectional view of an electronic display device having a pressure-sensing triboelectric layer.
**FIG. 3B** is a top view of one example of a set of elements for capacitive sensing, triboelectric force sensing, and haptic feedback.
**FIG. 3C** is an illustration of arrays of capacitive and triboelectric sensors with haptic feedback actuators overlaid on an electronic display.
**FIG. 4** is a flow chart of one example of the present methods for operating a triboelectric sensor and a capacitive sensor.
**FIG. 5** is a cross-sectional view of a triboelectric sensor on a substrate with a haptic feedback actuator and a capacitive sensor .
**FIG. 6A** is a cross-sectional view of thin films for a triboelectric sensor having an electronegative triboelectric layer.
**FIG. 6B** is a cross-sectional view of thin films for a double-sided triboelectric sensor having an electropositive triboelectric layer.
**FIG. 6C** is a cross-sectional view of thin films for a piezoelectric-based haptic feedback actuator with two thin film electrodes.
**FIG. 7** is a block diagram of an example of the present systems for receiving input and providing haptic feedback.
**FIGS. 8A-C** are example embodiments having stacked pressure and capacitive sensing layers a triboelectric layer to generate two signals.
**FIGS. 9A-C** are example embodiments having integrated pressure and capacitive sensing having a triboelectric layer to generate two signals.
**FIGS. 10A-C** are example embodiments having integrated pressure and capacitive sensing having a triboelectric layer to generate a signal representative of pressure and capacitance.
**FIGS. 11A-C** are example embodiments having integrated pressure and capacitive sensing having a triboelectric layer to generate a signal representative of pressure and capacitance.
**FIG. 12** is an example embodiment of an array of conductive sensors integrated with triboelectric pressure sensing.

### DETAILED DESCRIPTION OF ILLUSTRATIVE CONFIGURATIONS

Touch sensor operation in the present configurations are based on the principle of contact electrification, in which charges are generated when two materials with opposite electro affinity make contact. For example, charges are generated when a human finger touches the triboelectric layer as a result of the principle of contact electrification (triboelectrification).

Example touch sensor operation is illustrated in Figures 2A-E. Figure 2A is a cross-sectional view showing on example of a triboelectric sensor with a top electrode 212 and a bottom electrode 214. Electrodes 212 and 214 are in contact with thin films 202 and 204 of opposite electro affinity. For example, thin film 202 may be Kapton and thin film 204 may be PMMA. When a user presses on top electrode 212, thin film 202 makes contact with thin film 204 as shown in Figure 2B. The contact between thin films 202 and 204 generates a detectible signal across electrodes 212 and 214 that can be measured by appropriate read-out circuitry coupled to electrodes 212 and 214. When a user stops pressing on the device, thin films 202 and 204 separate as shown in Figure 2C. The release can likewise be detected by appropriate read-out circuitry by detecting current flow from the electrode 214 to the electrode 212. When the layers reach their maximum separation at Figure 2E the current flow stops. A user can then again press on the triboelectric sensor to reduce separation between the thin films 202 and 204 to create detectible current flow from the electrode 212 to the electrode 214. The applied pressure can continue to be applied to force contact between thin films 202 and 204 as shown in Figure 2B, or the force removed to return the thin films 202 and 204 to the configuration shown in Figure 2E.

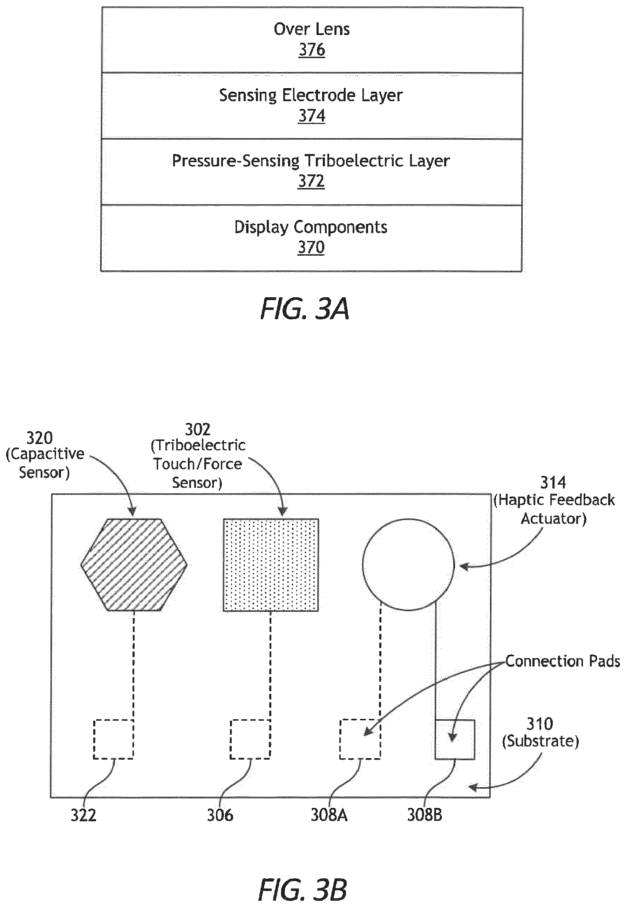

The touch sensor operation described with respect to Figures 2A-C can be incorporated into an array of elements configured to provide touch sensing, force sensing, and/or haptic feedback in a user device. One configuration of such elements is shown in Figure 3B. Figure 3B is a top-down view of one set of elements for capacitive sensing, triboelectric force sensing, and haptic feedback. The elements of Figure 3B can be arranged in other shapes and arrangements and used as a unit cell in forming arrays of elements that are interspersed for receiving two-dimensional user input.

Figure 3A is a cross-sectional view of an electronic display device having a pressure-sensing triboelectric layer. An electronic display device may include many layers, including a sensing electrode layer 374 and a pressure-sensing triboelectric layer 372 between a cover lens 376 and display components 370. The display components 370 may include biasing layers, polarizers, color filters, display subassemblies, polarizers, diffusers, backlights, and layers built on a transparent and/or flexible substrate. The pressure-sensing triboelectric layer 372 may be a triboelectric material such as Fluorinated polyhedral oligomeric Silsesquioxane (F-POSS). The pressure-sensing triboelectric layer 372 may replace or supplement a dielectric polymer layer, such as Polyethylene Terephthalate (PET), used in conventional capacitive touch-enabled display devices. In combination, the PET or other dielectric and F-POSS or other triboelectric may be stacked or the dielectric and triboelectric may be patterned such that the materials co-exist in the same layer of the electronic display device. The sensing electrode layer 374 may include a number of electrodes organized into arrays of sensors for detecting user input. When a user touches and applies a force to the electronic display device, one or more of the electrodes near the touch location in the sensing electrode layer 374 register that touch or applied force through a change in voltage, current, impedance, or other related electrical parameter, that will not be registered by other electrodes in the sensing electrode layer 374. The pressure-sensing triboelectric layer 372 may be biased during operation of the sensors by a biasing layer in the display components 370 and beneath the triboelectric layer 372. Although the terms "above" and "beneath" are used herein, the terms may be interchanged depending on a reference viewpoint such that a first layer above a second layer should be considered to be on either side of the second layer. Example configurations of arrays for the sensing electrode layer 374 are described further with reference to Figures 3B-C.

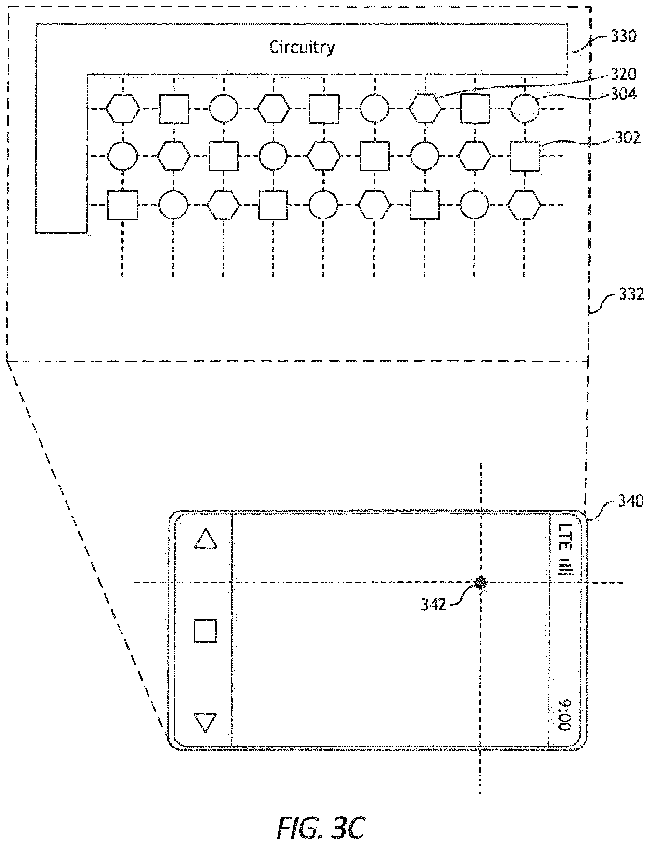

Figure 3B is a block diagram showing one example of an apparatus with a triboelectric sensor with a capacitive sensor and a haptic feedback actuator. As shown, such an apparatus can include a triboelectric force sensor 302, a haptic feedback actuator 304, and a capacitive sensor 320 on a substrate 310. Substrate 310 may be one of PET, PEN, PC, PMMA, Polyimide, Parylene-C, other thermoplastic materials, or other flexible or inflexible substrate material. Electrodes 306, 322 may couple sensors 302, 320, respectively, to logic circuitry (not shown in Figure 3), such as to an application processor integrated circuit (IC) or to an interface to an application processor. The electrodes 306, 308A-B, and 322 may be located on the sensing electrode layer 374 along with the sensors 302 and 320 and/or located on a printed circuit board separate from the electronic display device and coupled to the sensors 302 and 320 through traces or wires. Electrodes 308A-308B may couple actuator 304 to logic circuitry, such as the same application processor or interface coupled to electrodes 306 and 322. More or fewer electrodes may be used to couple circuitry to sensors 302, 320 and actuator 304 based on other factors involved in the design of apparatus 300. In one example, a single electrode may be used to couple to sensor 302, sensor 320, and actuator 304 in place of electrodes 306, 308A, and 322. Electrodes 306, 322, 308A, and 308B may comprise aluminum, copper, silver, indium tin oxide (ITO), tin oxide, fluorine-doped tin oxide, aluminum-doped zinc oxide, gallium-doped zinc oxide, PEDOT:pSS, or another conductive material or alloy. Apparatus 300 may be sized based on an intended use, amount of force anticipated, and/or manner of application of force. In one example, an apparatus may include an array of three components 302, 304, and 320 organized such that the components are interspersed. The triboelectric sensor and haptic feedback actuators may have different arrangements than that shown in Figure 3B. The components described with reference to Figure 3B may be integrated, for example, into a mobile device, such as a mobile phone, a tablet, a personal computer, or a medical device. The arrangement of sensors and actuators may be selected based on device requirements and features.

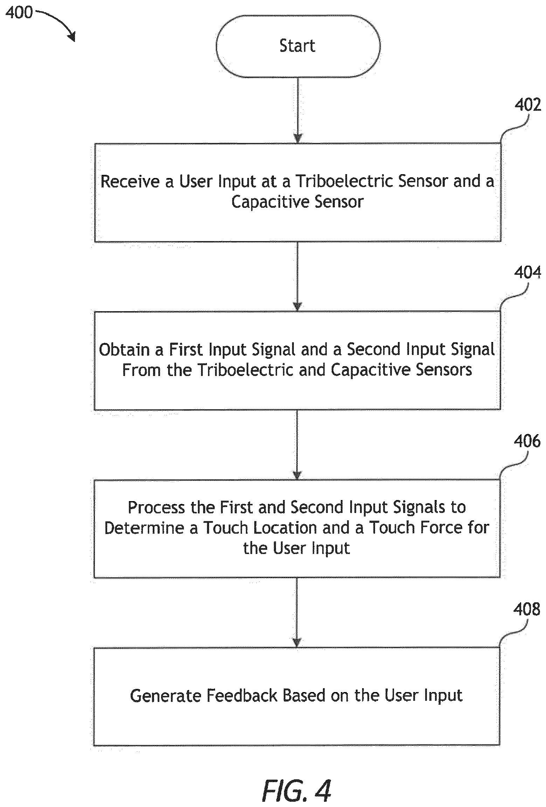

Figure 3C is an illustration of arrays of capacitive and triboelectric sensors with haptic feedback actuators overlaid on an electronic display. A user-input layer 332 may be overlaid on electronic display 340. User-input layer 332 may include a first array of capacitive sensors 320, a second array of triboelectric sensors 302, and a third array of actuators 304. The components may be interspersed such that, for example, one capacitive sensor is not neighboring any other capacitive sensor along one dimension. The components of user input layer 332 that overlap with the viewable portion of electronic display 340 may be transparent to reduce obstruction to electronic display 340. Circuitry 330 may be coupled to the arrays for receiving signals and providing signals to the arrays, such as described in the method of Figure 4. By individually addressing the arrays of sensors, user input at a particular location 342 may be determined. By individually addressing the haptic actuator array, user feedback may be localized to the location 342.

The triboelectric sensor, capacitive sensor, and haptic feedback actuator may be controlled to receive user input and provide responsive feedback to the user. Figure 4 shows a method for operating a co-located capacitive and triboelectric sensor and haptic feedback actuator, such as in the apparatus of Figures 3B-C. Method 400 may begin at block 402 by receiving a user input signal from a triboelectric sensor and capacitive sensor of a user input device. The user input signal may be, for example, represented by an analog waveform generated by the sensor or represented by a digital signal obtained by processing the sensor output. Next, at block 404, first and second input signals may be obtained from the capacitive sensor and the triboelectric sensor such that the force of the user's touch at the time of contact with the user input device can be coordinated with the location of the user's touch at the time of contact with the user input device. In some configurations, the first and second input signals are embedded in a single output from the sensor and processed to obtain corresponding touch and pressure sensing. In some configurations, the first and second input signals are both obtained directly from the sensors receiving the user touch input. At block 406, the user input signal may be processed to determine, for example, how much force a user exerted on the sensor, where in an array of sensors the user touched, or the like. Then, at block 408, feedback may be provided to the user. The feedback at block 408 may include the generation of a feedback signal may be generated to control a haptic feedback actuator. Other forms of feedback may include, for example, taking actions within the user device, such as setting a volume for the device corresponding to the pressure applied to the screen when the touch location is on a volume control.

The triboelectric sensor may be operated in conjunction with the haptic feedback actuator, such that feedback in the actuator is intended to convey to the user a sense that the input has been received. In such an example, feedback may be generated automatically in response to the receiving of the user input signal at block 402. Furthermore, the feedback signal may be generated based on the user input signal. For example, an amplitude of haptic feedback may be based on an amplitude of force received at the triboelectric sensor. The haptic feedback actuator may also or alternatively be used to provide substantive feedback from operations other than the mere acknowledgement of user input. For example, the processing at block 404 may determine if the user provides input at an incorrect time or location, and generate haptic feedback at block 406 that provides vibration near the user's finger to indicate the incorrect feedback. One application of such feedback may be vibration feedback when a user answers a question incorrectly in a quiz game.

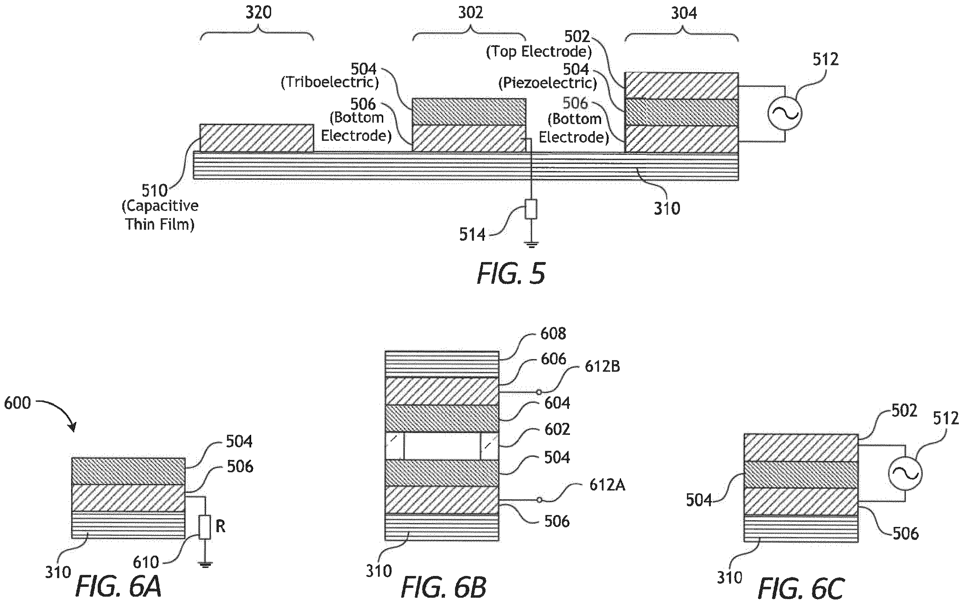

User input devices with triboelectric and capacitive sensors with haptic feedback may be constructed from thin films as shown in the example of Figure 5. Sensor 302 can comprise a bottom electrode 506 and a piezoelectric layer 504. Sensor 320 can comprise a capacitive sensing layer 510, which may and/be or include a conductive layer over substrate 310. Substrate 310 may refer to a starting material or one or more layers below the conductive layer. In this example, haptic feedback actuator comprises bottom electrode 506, piezoelectric layer 504, and a top electrode 502. A stimulus, such as an AC voltage source 512, may be coupled to electrodes 502 and 506 of actuator 304 to generate haptic feedback (e.g., vibration). Upon the application of an alternating electric field such as from an AC signal source 512, piezoelectric layer 504 changes its volume to create an intrinsic vibration that can be used to recreate the sense of touch. The amplitude and frequency of AC signal source 512 may be adjusted to provide custom, dynamic haptic feedback. A sense resistor 514 may be coupled to bottom electrode 506 of sensor 302 to provide signals indicative of user input received by the sensor 302. A sense resistor 514 may be a discrete component or a thin film layer deposited on the substrate 310. Although bottom electrode 506 is shown as a common layer between the sensor 302 and actuator 304, different materials or thicknesses may be used between the sensor 302 and the actuator 304.

Triboelectric layer 504 may be an electronegative triboelectric layer or electropositive triboelectric layer. Examples of electronegative triboelectric layers include PVDF and its copolymers (e.g., PVDF-TrFE, PVDF-TrFE CFE, and PVDF-HFP), PDMS, PMMA, Teflon, polymer foams, poly(methyl methacrylate)-co-poly(1H-1H-perfluoroctyl methacrylate), and other electronegative polymers. Examples of electropositive triboelectric layers include human hands (such as when only a single electrode is coupled to the triboelectric layer), acetate, mica, nylon, and other electropositive polymers. Examples of piezoelectric layers include PVDF and its copolymers (PVDF-TrFE, PVDF-TrFE CFE, and PVDF-HFP), Parylene-C, cellular polypropylene, cellular PEN, voided charged polymers, polymer-based electrets, piezoelectric composite materials having a polymeric matrix, and other materials that exhibit the piezoelectric effect. In some configurations, triboelectric layer 504 may be a thin film comprising Fluorinated polyhedral oligomeric Silsesquioxane (F-POSS) and/or benzophenone functionalized polycarbonate. Additional details regarding F-POSS are described in U.S. Patent Application No. 62/626,772, which is incorporated by reference herein.

Sensors 302, 320 and actuator 304 may be formed by a combination of photolithography and deposition steps. For example, each of layers 506, 504, and 502 may be deposited on substrate 310 and subsequently patterned to form each individual sensor 302 and actuator 304. As another example, a sacrificial layer may be deposited on substrate 310 and patterned to form openings corresponding to sensors 302, 320 and actuator 304. Layers 506, 504, and 502 may be deposited in the openings, and the sacrificial layer lifted off to leave sensor 302 and actuator 304. Other manufacturing processes are possible for forming sensors 302, 320 and actuator 304, such as thin film deposition and patterning methods, screen and ink jet printing, chemical vapor deposition, physical vapor deposition, and solution processing methods. When manufacturing sensors 302, 320 and actuator 304 on a flexible substrate, processing steps may be limited based on the use of the flexible substrate, such as by having a maximum processing temperature of 135 degrees Celsius.

Configurations for the thin films that make up the triboelectric and capacitive sensors and haptic feedback actuators may take on one of many forms regardless of the topological configuration of the sensor and actuator shown in the top-down view of Figure 3. Some example thin film configurations are shown in Figure 6A and Figure 6B.

Figure 6A is a cross-sectional view illustrating thin films for an example of a triboelectric sensor having an electronegative triboelectric layer. A layer stack 600 may include a suitable triboelectric material 504 on top of a suitable conductive material (e.g., electrode) 506, on top of a suitable substrate 310, to form a single electrode touch/force sensor used in example apparatuses, systems, and devices described herein. Triboelectric layer 504 may be, for example, an electronegative triboelectric layer. In some device configurations, a resistor 610, which may be a thin film resistor, may be coupled to the electrode to convey an electric signal from triboelectric layer 504 to other circuitry.

Another example of a triboelectric touch sensor can have a dual electrode configuration such as depicted in Figure 6B. Figure 6B is a cross-sectional view of an example of thin films for a double-sided triboelectric sensor having an electropositive triboelectric layer. In layer stack 610 a physical gap, created by the use of a suitable spacer 602, may exist between a second triboelectric layer 604 underneath a second conductive material (e.g., electrode) 606, which is underneath a second substrate 608. Triboelectric layer 604 may be, for example, an electropositive triboelectric layer. Touch sensor operation may be based in the principle of contact electrification, in which charges are generated when two materials with opposite electro affinity make contact. For example, charges may be generated when a human finger touches the triboelectric layer because of the principle of contact electrification (e.g., triboelectrification). Electrode contacts 612A and 612B may be coupled to the electrodes 506 and 606, respectively.

Figure 6C is a cross-sectional view of an example of thin films for a piezoelectric actuator. A first electrode 506, a piezoelectric material 504, and a second electrode 502 are placed above a substrate 310. A voltage source 512 coupled to the electrodes 506 and 502 provide a voltage to control haptic feedback provided by the actuator of Figure 6C.

In one scenario, both the touch sensor and haptic feedback actuator can be made of the same active polymeric material. In one example, the same piezoelectric material that forms the actuator may be used as the triboelectric layer in the touch sensor. In such a configuration, the piezoelectric material may be electronegative. In another example, different active materials may be used for the touch sensor and the haptic feedback actuator.

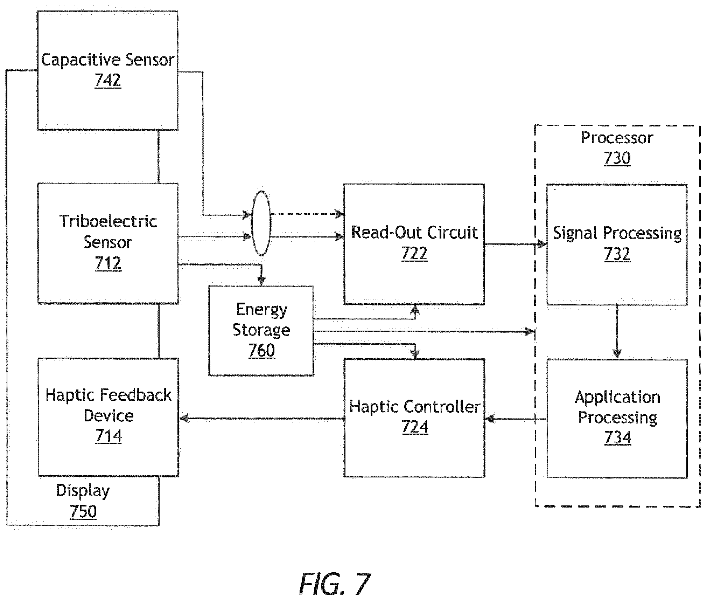

Figure 7 is a block diagram of an example of the present systems for receiving input and providing feedback, such as haptic feedback. In system 700, triboelectric sensors 712 may be coupled to read-out circuit 722. Triboelectric sensors 712 may have the structures described above or other structures, such as described in U.S. Patent Application Nos. 62/356,687, 62/356,694, and 62/443,193, each of which is incorporated by reference herein. Read-out circuit 722 may receive signals from electrodes of triboelectric sensor 710. Read-out circuit 722 may be configured to address individual sensors in the array and/or to interpret signals received from the sensors 712. Example read-out circuits are described in U.S. Patent No. 62/640,500, which is incorporated by reference herein. Capacitive sensors 742, located on an electronic display 750 along with triboelectric sensor 712, may also be coupled to read-out circuit 722. Read-out circuit 722 may include shared circuitry for accessing sensors 712 and 742 or dedicated circuitry for accessing sensors 712 and 742. A user input signal may be produced by read-out circuit 722 and output to a signal processing block 732 of a processor 730. The read-out circuit 722 may receive two separate signals corresponding to the capacitive and pressure sensing components or may receive a single signal containing both components embedded therein. In some embodiments, using non-haptic feedback, the haptic controller 724 and haptic feedback device 714 may be absent and feedback is provided from the application processing block 734 to provide feedback through another component such as a display.

Processor 730 may include a signal processing block 732 and an application processing block 734, among other functionality. Signal processing block 732 may process the user input signal to improve signal characteristics, such as signal-to-noise ratio, and/or determine a user input. For example, signal processing block 732 may determine a portion of a display screen touched by a user. As one example, signal processing block 732 may determine, based on user input to sensor 710, that the user provided input to an "OK" button in a pop-up message box. As another example, signal processing block 732 may determine based on user input to an array of sensors 710 that a user swiped upwards, forwards, backwards, or downwards across the screen. Application processing block 734 may take action based on the user input detected in signal processing block 734. For example, application processing block 734 may cause a mobile application executing on a smart phone to close the pop-up message box when the user input is pressing the "OK" button in the pop-up message box. As another example, the application processing block 734 may cause a mobile application executing on a smart phone to move to a next or previous page of content when the user input is a upwards, forwards, backwards, or downward swipe. As part of execution of an application, the application processing block 734 may cause haptic feedback to be provided to the user.

When haptic feedback is desired, application processing block 734 may operate a haptic controller 724 to actuate haptic feedback devices 714. Haptic controller 724 may include a driver, having a signal generator, power amplifier, and the appropriate circuitry to enable both. In some configurations, haptic controller 724 is implemented using conventional silicon-based electronics and/or embedded within the active layer film using thin film circuitry. When an array of haptic feedback devices are present, haptic controller 724 may include circuitry for addressing individual haptic feedback devices and controlling the addressed device or devices to produce the haptic feedback indicated by application processing block 734. Different stimuli can be recreated by haptic controller 724. Vibration of the feedback device 714 can be controlled by the shape (e.g., step function, sinusoidal, pulsed, etc.), frequency (e.g., ranging from 1 Hz to 100,000 Hz), amplitude (e.g., from 20 V to 200V) and/or duty cycle of a drive signal sent to the device 714.

Read-out circuit 722, haptic controller 724, signal processing block 732, and/or application processing block 734 may include circuitry configured to perform the operations described herein. In some configurations, the steps performed by each of these components are implemented on a general-purpose processor or digital signal processor and may include software code that when executed cause the processor to perform the operations described herein. In some configurations, the circuitry or other hardware may be configured using firmware.

Different sensations can be recreated by providing particular drive signals to a haptic feedback device (e.g., by changing between a step function, a sinusoidal function, and a pulse function), but different sensations can also be provided from actuators with different geometries, sizes, and/or arrangement of actuators in an array of actuators in which the different feedback devices can deliver different forces, thus resulting in different sensations to the user. In some configurations, the actuators may operate independently with different input signals, such as to provide for feedback localization in a given area (e.g., by selectively activating some actuators to stimulate localized sections of a finger pad user input device).

Arrays of sensors and actuators may be accessed through, for example, haptic controller 724 and read-out circuit 722 of Figure 7. In such a configuration, an array may include interspersed triboelectric sensors 302, capacitive sensors 320, and haptic feedback actuators 304 configured as shown in Figure 3 coupled through interconnects to drivers and/or read-out circuitry. Read-out circuitry 722 may include a multiplexer. The multiplexer may be configured to provide individual addressing of components in the array.

In some configurations, energy generated by triboelectric sensors 712 may be stored and/or used to power components of the apparatus. For example, energy storage device 760 may be coupled to triboelectric sensor 712 to receive energy generated when the triboelectric sensor 712 is touched. Energy storage device 760 may store energy, for example, electronically, such as in a capacitor, or chemically, such as in a battery or fuel cell. Energy storage device 760 may be coupled to one or more of read-out circuit 722, processor 730, haptic controller 724, and/or haptic feedback device 714 to supply a supply voltage for operating the components. In some configurations, the triboelectric sensors 712 and/or other components may be operated without an external power supply, which increases battery life in mobile devices.

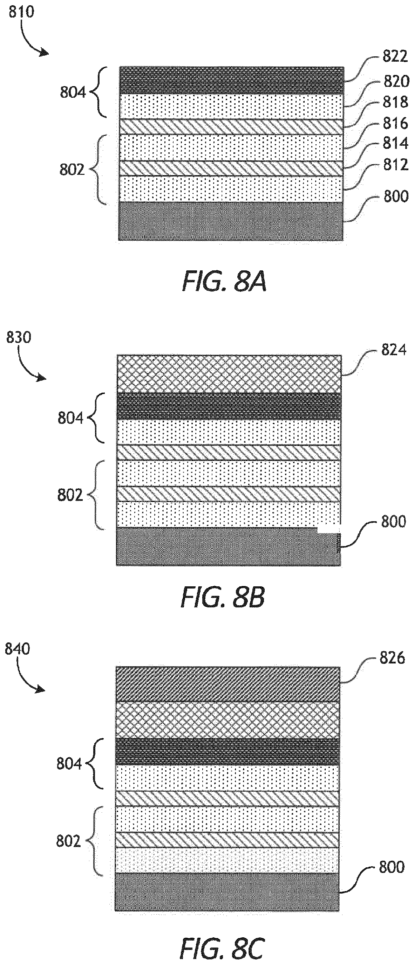

Example embodiments of a combined pressure and touch sensor described above are illustrated in Figures 8-11. The examples of Figures 8-11 incorporate a pressure-sensing triboelectric layer and a first transparent conductive layer stacked vertically such that a portion of the stack operates as a capacitive sensor and another portion of the stack operates as a triboelectric sensor. The capacitive sensor portion detects changes in electrostatic fields as described with respect to Figure 1 by measuring a capacitance between two conductive layers separated by an insulating material. The pressure-sensing triboelectric layer portion detects applied force through the triboelectric effect described, for example, in Figures 2A-E.

Figures 8A-C are example embodiments having stacked pressure and capacitive sensing layers having a triboelectric layer to generate two signals. A layer stack 810 includes capacitive, dielectric, and triboelectric layers above a display device 800. The display device 800 may be, for example, a liquid crystal display (LCD), and be part of one or more display components. Above the display device 800 are a first transparent conductive layer 812, a dielectric layer 814, a second transparent conductive layer 816, a dielectric layer 818, a third transparent conductive layer 820, and a tribonegative layer 822. Additional layers may be deposited on or within the layer stack 810, such as shown in Figures 8B and 8C and optically clear adhesives (OCA). Layer stack 830 of Figure 8B includes a tribopositive layer 824 partially in contact with the tribonegative layer 822. Layer stack 840 of Figure 8C includes an encapsulation layer 826 above the triboelectric layers 822 and 824. In devices using layer stacks 810, 830, or 840, the layer stacks may be patterned into arrays of individual sensors. The portion 802 of the layer stack may be used for capacitive sensing (e.g., sensing a capacitance between the conductive layers) to identify a location of a user touch. The portion 804 of the layer stack may be used for pressure sensing to identify an amount of force applied at the location. The transparent conductive layers 814 and 818 may couple to electrodes away from the individual patterned sensors for read-out and processing of signals by circuitry such as shown in Figure 7. For example, transparent conductive layer 814 may be used as a drive line and transparent conductive layer 816 may be used as a sense line. Two different signals may be detected through the transparent conductive layers 814 and 816 corresponding to the user's touch location and force.

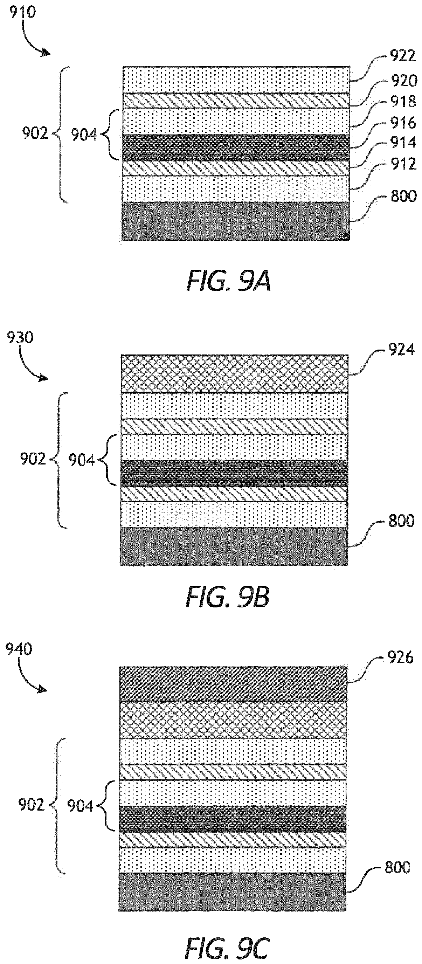

Figures 9A-C are example embodiments having integrated pressure and capacitive sensing having a triboelectric layer to generate two signals. A layer stack 910 may include several layers deposited over display device 800. The layer stack 910 includes a first transparent conductive layer 912, a dielectric 914, a tribonegative layer 916, a transparent conductive layer 918, a dielectric 920, and a transparent conductive layer 922. A portion 902 of the layer stack 910 provides capacitive sensing to determine a location of a user touch, and a portion 904 provides pressure sensing to determine an amount of force applied at the location. Additional layers may be deposited on or within the layer stack 910, such as shown in Figures 9B and 9C. Layer stack 930 of Figure 9B includes a tribopositive layer 924 in contact with the tribonegative layer 922. A spacer (not shown) may be placed between the tribopositive layer 924 and the tribonegative layer 922, as shown in Figure 6B. Layer stack 940 of Figure 9C includes an encapsulation layer 926 above the triboelectric layers 922 and 924. Two different signals may be detected through the transparent conductive layers 914 and 920 corresponding to the user's touch location and force.

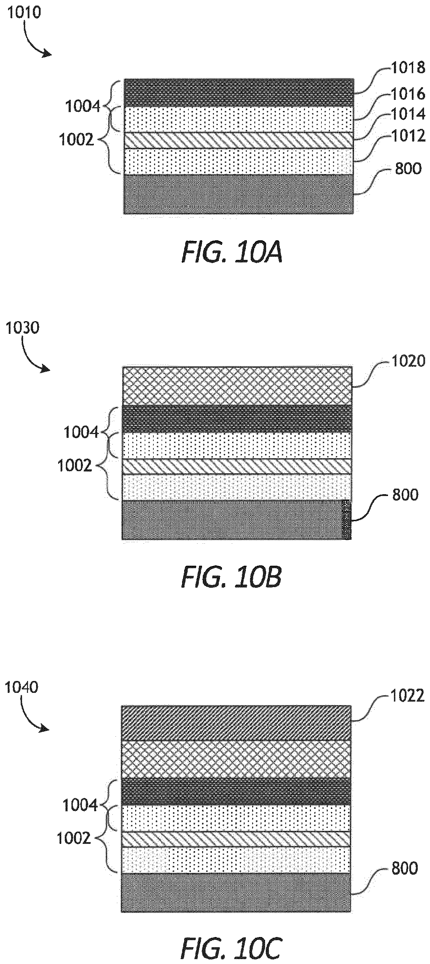

Figures 10A-C are example embodiments having integrated pressure and capacitive sensing having a triboelectric layer to generate a signal representative of pressure and capacitance. A layer stack 1010 may include several layers deposited over display device 800. The layer stack 1010 includes a first transparent conductive layer 1012, a dielectric layer 1014, a second transparent conductive layer 1016, and a tribonegative layer 1018. A portion 1002 of the layer stack 1010 provides capacitive sensing to determine a location of a user touch, and a portion 1004 provides pressure sensing to determine an amount of force applied at the location. Additional layers may be deposited on or within the layer stack 1010, such as shown in Figures 10B and 10C. Layer stack 1030 of Figure 10B includes a tribopositive layer 1020 in contact with the tribonegative layer 1018. A spacer (not shown) may be placed between the tribopositive layer 1020 and the tribonegative layer 1018, as shown in Figure 6B. Layer stack 1040 of Figure 10C includes an encapsulation layer 1022 above the triboelectric layers 1018 and 1020. A single signal may be detected through the transparent conductive layer 1014 corresponding to the user's touch location and force. Processing in the circuitry, such as shown in Figure 7, may be used to obtain the touch location and applied force.

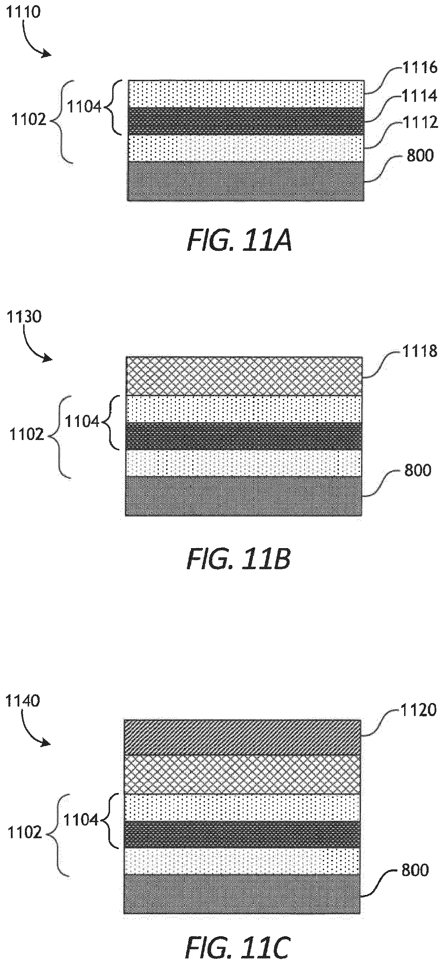

Figures 11A-C are example embodiments having integrated pressure and capacitive sensing having a triboelectric layer to generate a signal representative of pressure and capacitance. A layer stack 1110 may include several layers deposited over display device 800. The layer stack 1110 includes a first conductive layer 1112 over the display device 800, a tribonegative layer 1114 over the first conductive layer 1112, and a second conductive layer 1116 over the tribonegative layer 1114. A portion 1002 of the layer stack 1010 provides conventional capacitive sensing to determine a location of a user touch, and a portion 1004 provides pressure sensing to determine an amount of force applied at the location. Additional layers may be deposited on or within the layer stack 1110, such as shown in Figures 11B and 11C. Layer stack 1130 of Figure 11B includes a tribopositive layer 1118. A spacer (not shown) may be placed between the tribopositive layer 1118 and the tribonegative layer 1114, as shown in Figure 6B. Layer stack 1140 of Figure 11C includes an encapsulation layer 1120 above the tribopositive layer 1118. A single signal may be detected through the transparent conductive layer 1116 corresponding to the user's touch location and force. Processing in the circuitry, such as shown in Figure 7, may be used to obtain the touch location and applied force. Using the tribopositive layer 1118 as a dielectric layer simplifies the layer stack, which reduces device cost by reducing materials and amount of manufacturing time.

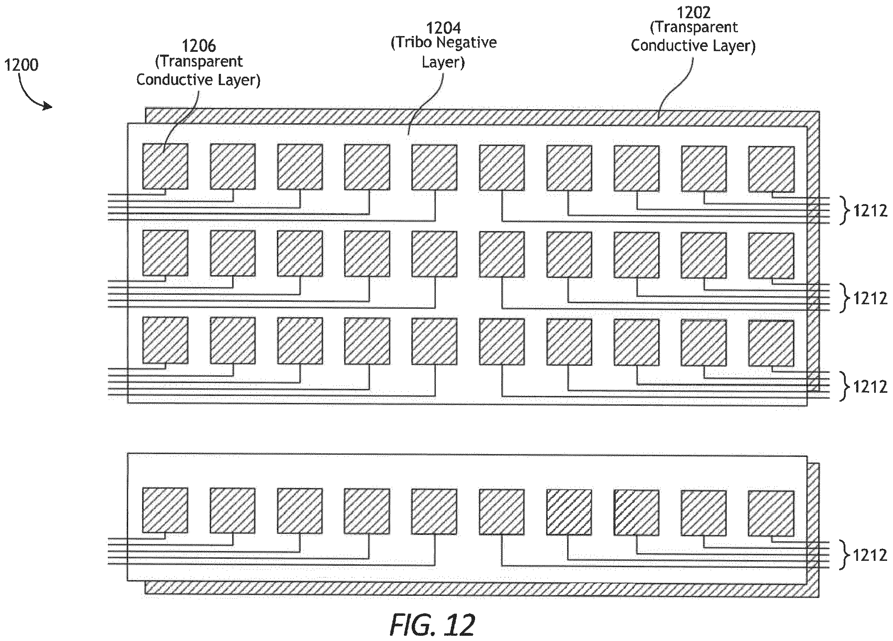

The second transparent conductive layer 1116 may be patterned into an array of electrodes for sensing a location of user input on the display device. An example pattern for electrodes is shown in Figure 12. Figure 12 is an example embodiment of an array 1200 of conductive sensors integrated with triboelectric pressure sensing. A first transparent conductive layer 1202 may remain in a layer form. A tribonegative layer 1204 may be located above the first transparent conductive layer 1202. A patterned second transparent conductive layer 1206 may be located above the tribonegative layer 1204. The tribonegative layer 1204 functions as a dielectric between the conductive layers 1202 and 1206 for providing capacitive sensing. The tribonegative layer 1204 also provides pressure sensing corresponding to the force applied to the sensor during the user input. Connections 1212 couple the electrodes of the conductive layer 1206 to a controller to convey one or more signals from the array to the controller for deconstruction into a location and an applied force.

In some applications of the device, wireless communications may be integrated with the triboelectric sensor and haptic feedback device to allow receipt of user input by a remote processing device. For example, the user input device with triboelectric and capacitive sensors and haptic feedback may be integrated into a standalone consumer device with wireless communications. That user input device may communicate with a computing devices, such as a laptop computer, tablet, or cellular phone, through RF communications according to, for example, WiFi, Bluetooth, NFC, ZigBee, or the like.

If implemented in firmware and/or software, the functions described above, such as with respect to the flow chart of Figure 4, may be stored as one or more instructions or code on a computer-readable medium. Each of the steps and functions described above may be executed by processor 730 alone. Examples of computer-readable medium for storing code for execution by processor 730 and/or other logic circuitry include non-transitory computer-readable media encoded with a data structure and computer-readable media encoded with a computer program. Computer-readable media includes physical computer storage media. A storage medium may be any available medium that can be accessed by a computer. By way of example, and not limitation, such computer-readable media can comprise random access memory (RAM), read-only memory (ROM), electrically erasable programmable read-only memory (EEPROM), compact-disc read-only memory (CD-ROM) or other optical disk storage, magnetic disk storage or other magnetic storage devices, or any other medium that can be used to store desired program code in the form of instructions or data structures and that can be accessed by a computer. Disk and disc includes compact discs (CD), laser discs, optical discs, digital versatile discs (DVD), floppy disks, and Blu-ray discs. Generally, disks reproduce data magnetically, and discs reproduce data optically. Combinations of the above should also be included within the scope of computer-readable media.

The above specification and examples provide a complete description of the structure and use of illustrative configurations. Although certain configurations have been described above with a certain degree of particularity, or with reference to one or more individual configurations, those skilled in the art could make numerous alterations to the disclosed configurations without departing from the scope of this disclosure. As such, the various illustrative configurations of the methods and systems are not intended to be limited to the particular forms disclosed. Rather, they include all modifications and alternatives falling within the scope of the claims, and configurations other than the one shown may include some or all of the features of the depicted configurations. For example, elements may be omitted or combined as a unitary structure, connections may be substituted, or both. Further, where appropriate, aspects of any of the examples described above may be combined with aspects of any of the other examples described to form further examples having comparable or different properties and/or functions, and addressing the same or different problems. Similarly, it will be understood that the benefits and advantages described above may relate to configuration or may relate to several configurations. Accordingly, no single implementation described herein should be construed as limiting and implementations of the disclosure may be suitably combined without departing from the teachings of the disclosure.

The claims are not intended to include, and should not be interpreted to include, means-plus- or step-plus-function limitations, unless such a limitation is explicitly recited in a given claim using the phrase(s) "means for" or "step for," respectively.

## Claims

1. An apparatus comprising:
one or more display components;
a user input sensing layer stack above the display components, wherein the layer stack is configured to generate one or more signals corresponding to a location of user input and a magnitude of touch force applied by a user, and wherein the layer stack comprises a pressure-sensing triboelectric layer and a first transparent conductive layer stacked vertically, and wherein the layer stack provides capacitive sensing and pressure sensing.

2. The apparatus of claim 1, wherein the pressure-sensing triboelectric layer comprises at least one of Fluorinated polyhedral oligomeric Silsesquioxane (F-POSS), benzophenone functionalized polycarbonate (XPC), and a combination thereof

3. The apparatus of claim 1, further comprising a controller in communication with the user input sensing layer stack and configured to generate at least one location signal and at least one pressure signal based on the one or more signals generated from the user input sensing layer stack.

4. The apparatus of claim 3, wherein the controller is configured to deconstruct the one or more signals to obtain the location and the magnitude of touch force.

5. The apparatus of claim 3, wherein the one or more display components, the user input sensing layer stack, and the controller are integrated into a mobile device.

6. The apparatus of claim 1, wherein the user input sensing layer stack comprises the first transparent conductive layer above the display components, a first dielectric layer above the first transparent conductive layer, a second transparent conductive layer above the first dielectric layer, a second dielectric layer above the second transparent conductive layer, a third transparent conductive layer above the second dielectric layer, and the pressure-sensing triboelectric layer above the third transparent conductive layer.

7. The apparatus of claim 1, wherein the user input sensing layer stack comprises the first transparent conductive layer above the display components, a first dielectric layer above the first transparent conductive layer, the pressure-sensing triboelectric layer above the first dielectric layer, a second transparent conductive layer above the pressure-sensing triboelectric layer, a second dielectric layer above the second transparent conductive layer, and a third transparent conductive layer above the second dielectric layer.

8. The apparatus of claim 1, wherein the user input sensing layer stack comprises the first transparent conductive layer above the display components, a first dielectric layer above the first transparent conductive layer, a second transparent conductive layer above the first dielectric layer, and the pressure-sensing triboelectric layer above the second transparent conductive layer.

9. The apparatus of claim 1, wherein the user input sensing layer stack comprises the first transparent conductive layer above the display components, the pressure-sensing triboelectric layer above the first transparent conductive layer, and a second transparent conductive layer above the pressure-sensing triboelectric layer.

10. The apparatus of any of claims 6-9, wherein the pressure-sensing triboelectric layer comprises an electronegative material, and wherein the user input sensing layer stack further comprises an electropositive triboelectric layer.

11. The apparatus of any of claims 6-9, wherein the user input sensing layer stack further comprises an encapsulation layer above all layers of the capacitive sensor portion and the triboelectric portion of the user input sensing layer stack.

12. The apparatus of any of claims 6-9, wherein the second transparent conductive layer is patterned into a first array of electrodes.

13. The apparatus of claim 12, wherein the location of user touch corresponds to at least one of the first array of electrodes.

14. The apparatus of claim 1, further comprising:
an energy storage device coupled to the pressure-sensing triboelectric layer and configured to store energy generated when a force is applied to the pressure-sensing triboelectric layer.

15. The apparatus of claim 1, further comprising:
a flexible substrate,
wherein the user input sensing layer stack are above the flexible substrate.
